# EUROPEAN PATENT APPLICATION

(11) **EP 4 134 993 A1**
(43) Date of publication of application: **15.02.2023**
(21) Application number: 21190887.6
(22) Date of filing: 11.08.2021
(51) Int. Cl.: H01G 11/10, H01G 11/18, H01G 11/76, H01G 11/82

(54) **ELECTROCHEMICAL CELL COMPRISING ELECTRODES A SEPARARTOR AND TERMINALS WITH CHANNELS FOR FLUID COOLING IT**

(71) Applicant: Geyser Batteries Oy, 00180 Helsinki (FI)
(72) Inventor: BELIAKOV, Aleksei, 305004 Kursk (RU); SERBIN, Anton, 53550 Lappeenranta (RU); SHORSTOV, Aleksandr, 305044 Kursk (RU)
(74) Representative: Mewburn Ellis LLP

(57) **Abstract**

The present invention provides an assembly of elements comprising two electrodes (positive electrode 4 and negative electrode 5), a separator (6), a bipolar collector (8), a terminal (7) and a fluid-propelling mechanism. The terminal (7) comprises a channel (9) through which a fluid (air or liquids) is propellable by fluid-propelling mechanism. The assembly of elements is useful for efficient removal of heat from its area of generation at the terminal, especially when operated in heavy-duty mode. The invention also relates to a cell, an electrochemical energy storage device, a back-up power source or a regenerative braking system, in which the assembly may be used.

## Description

### Field of the Invention

The present invention relates to a cell assembly for use in an electrochemical energy storage device such as a secondary battery or a supercapacitor. The invention also relates to electrochemical energy storage devices comprising such cell assemblies, for example supercapacitors or lithium-ion batteries.

### Background

Known electrochemical capacitor batteries comprise a battery housing, having two or more capacitors therein. Each capacitor comprises a housing that contains one or more blocks of cells, having carbon electrodes of different polarity and a separator arranged between the electrodes, which is impregnated with electrolyte.

RU 2308111 C2 discloses such an electrochemical capacitor battery which also has a cooling system, comprising heat-dissipating plates (for example, radiators) located between the capacitor housings and in contact with a heat transfer medium distribution device with a mechanism for supply and removal of the heat transfer medium. The mechanism can be an air fan. The disadvantage of this design is insufficient cooling of the blocks of cells through heat removal from the external surface of the capacitor housing, because the materials of the cells have non-zero thermal resistance, which leads to heat accumulation inside the housing.

Meanwhile, in the electrochemical energy storage device disclosed in RU 168096 U1, cooling is provided because the terminals of the blocks of cells are in the form of heat-dissipating plates. However, this design also provides insufficient cooling, as heat is removed from the plates to the device housing through the internal part of the housing, which leads to heat accumulation on its internal surface and inside the housing.

Furthermore, in the electrochemical energy storage device disclosed in RU 109921 U1, the terminals of the blocks of cells are in the form of fin-cooled heat-dissipating plates. However, this design also leads to insufficient cooling due to accumulation of heat inside the block of cells. The heat is removed around the perimeter of the terminal fins into the air outside the device and does not contribute to the normal heat removal from the block of cells, while the heat is removed slowly from the middle part of the contact area between the terminals and the electrodes of the block of cells.

The present invention has been developed to address the above-mentioned problems.

### Summary of the Invention

A first aspect of the invention is an assembly of elements comprising a first electrode, a second electrode, a separator interposed between and in contact with the first electrode and the second electrode, a collector on the first electrode, a terminal in electrical connection with the collector, and a fluid-propelling mechanism; wherein the terminal comprises a channel through which a fluid is propellable by the fluid-propelling mechanism.

The technical effect of the invention is improved efficiency of heat removal due to forced heat removal through the terminal. The combination of a terminal, comprising a channel, and the fluid-propelling mechanism, which can propel a fluid through the channel, ensures improved heat removal due to equalised and constant removal of the fluid (which acts as a heat transfer medium) from the terminal, thus avoiding heat accumulation in the device. As such, heat is removed directly from the area of its generation. Suitably, the fluid is a gas (such as air) or a liquid.

In some embodiments, the assembly comprises a laminate structure comprising:
a first layer comprising (or consisting of) the separator;
a second layer, in contact with the first layer, comprising (or consisting of) the first electrode;
a third layer, in contact with the second layer, comprising (or consisting of) the collector; and
a fourth layer, optionally in contact with the third layer, comprising (or consisting of) the terminal.

In some embodiments, the fourth layer is in contact with the third layer.

In some embodiments, the assembly comprises a laminate structure, each element making up a layer within the laminate structure, with the layers assembled in the following order: second electrode, separator, first electrode, collector, terminal. In some embodiments in which the assembly comprises a laminate structure, the fluid-propelling mechanism is not a layer within the laminate structure. In some embodiments, the second electrode contacts the separator, the separator contacts the first electrode, the first electrode contacts the collector, the collector contacts the terminal, and the fluid-propelling mechanism is in fluid communication with the channel of the terminal.

In some embodiments, the assembly comprises means to hold or clamp together multiple elements of the assembly. In some embodiments, the means to hold or clamp together multiple elements of the assembly comprises opposing clamps operable to place the multiple elements under a compressive force.

In some embodiments, the first and second electrodes comprise or consist of carbon electrodes, for example carbon powder electrodes. In some embodiments, the first and second electrodes comprise or consist of woven material, for example woven carbon material. In some embodiments, the first and second electrodes comprise or consist of activated carbon woven material. In some embodiments, the first and second electrodes are impregnated with a suitable electrolyte. The skilled person is aware of suitable electrolytes and can choose an electrolyte based on the desired function of the device.

The electrodes may independently have a thickness of from 100 to 500 µm, for example from 100 to 400 µm, 150 to 350 µm, 250 to 350 µm, about 250 µm, or about 350 µm.

In some embodiments, the separator is impregnated with a suitable electrolyte. The skilled person is aware of suitable electrolytes and can choose an electrolyte based on the desired function of the device.

In some embodiments, the first and second electrodes and the separator are impregnated with a suitable electrolyte. In some embodiments, the first and second electrodes and the separator are impregnated with the same electrolyte.

The electrolyte may comprise a concentrated salt solution. Exemplary concentrated salt solutions are described in WO 2020/121015 A1, the contents of which are incorporated by reference herein in their entirety. For example, the electrolyte may comprise a solution of metal halide salts, for example metal bromide salts. In some embodiments, the concentration of salt in the concentrated salt solution is at least 25 wt%, for example at least 30 wt%, at least 40 wt% or at least 50 wt%. The concentration may be 25-65 wt%. Herein, wt% with regard to an electrolyte salt solution indicates the weight of solute relative to the total weight of the solution. So, 100 g of a concentrated salt solution of calcium bromide 16 wt%, sodium bromide 16 wt% and zinc bromide 20 wt% would contain 16 g of calcium bromide, 16 g of sodium bromide and 20 g of zinc bromide (with the balance 48 g solvent, such as water).

The separator is ion-permeable. The skilled person is aware of suitable materials to use as a separator and such separators for use in electrical energy storage devices are commercially available. In some embodiments, the separator comprises a planar sheet. In some embodiments, the separator comprises a cellulosic material, for example a material comprising cellulose fibres. In some embodiments, the separator comprises paper. In some embodiments, the separator comprises paper and a binder.

The separator may comprise pores having a size of not more than 5 µm.

The collector may comprise conductive film. In some embodiments the collector comprises a conductive film comprising a material selected from one or more of conductive metal, conductive alloy and conductive plastics. In some embodiments the collector comprises a conductive film comprising a material selected from one or more of Al, Cu, Ni and conductive plastics comprising carbon black or graphite. In some embodiments the collector has a thickness of from 50 to 200 µm, for example from 50 to 150 µm, 50 to 120 µm, 80 to 120 µm, 90 to 110 µm, or about 100 µm.

The assembly may comprise sealant between any two neighbouring elements to hold the elements in place.

The fluid, which is not part of the claimed assembly, is preferably air or a liquid. The fluid acts as a heat transfer medium. The use of a liquid with a higher thermal capacity than that of air ensures more efficient cooling of the assembly.

In some embodiments, the terminal is a planar terminal, for example a substantially flat plate comprising a hollow space within and through the plate. Herein, the term "planar" denotes a structure in which two dimensions (the x- and y-dimensions) are each at least 5 times larger than a third dimension (the z-dimension). In this way, the contact area between the terminal and the collector or, if present, a conductive element (as described below) is increased, providing higher thermal and electrical conduction. The terminal may be, for example, a rectangular prism in which the length and width are each at least 5 times larger than the depth or thickness.

Preferably, the terminal is made of a material with high current conductivity. Preferably, the terminal is made of a material with high thermal conductivity. Preferably, the terminal is made of a metal. In preferred embodiments, the terminal is made of aluminium.

The exact dimensions of the terminal are not limited and will depend upon the intended application of the device which contains the assembly. In a typical device the terminal may be a planar plate with a thickness of from 3 to 30 mm, for example from 5 to 25 mm, 7 to 20 mm, 10 to 15 mm, or about 12 mm. The x- and y-dimensions of the planar plate are also not limited. In some embodiments, the x-dimension is longer than the y-dimension. In some embodiments, the x-dimension is from 100 to 200 mm, for example from 120 to 190 mm, 140 to 180 mm, 160 to 170 mm, or about 168 mm. In some embodiments, the y-dimension is from 100 to 200 mm, for example from 120 to 180 mm, 130 to 170 mm, 140 to 160 mm, or about 150 mm.

Preferably, the lateral extent of the terminal is larger than the extent of the element of the assembly with which it is in contact, which element is the collector or, if present, a conductive element, as described below. In other words, the width or length (x- or y-dimension) of the terminal, or both width and length, may be larger than the corresponding dimension of the collector or, if present, the conductive element. In this way, the terminal can be used as an electrical contact to connect, for example, a load or charger to the terminal, when the assembly is used in an electrochemical energy storage device. Moreover, the maximum possible contact area between the terminal and the collector or, if present, the conductive element can be achieved, because the entire extent of the collector or conductive element in said dimension makes contact with the terminal. In some embodiments, the lateral extent of the terminal is larger than the extent of the collector or, if present, the conductive element in all directions, such that the entire surface of the collector or conductive element makes contact with the terminal, providing the maximum possible contact area.

The terminal comprises a channel through which a fluid is propellable by the fluid-propelling mechanism.

In some embodiments, the channel takes the form of a hollow space within and/or through the terminal.

In some embodiments, the channel extends within the terminal substantially in the plane of the terminal. In other words, while being three-dimensional, the channel extends substantially along the width and/or length (x- and/or y-dimension), rather than through or across the depth of the plane in the z-dimension from a first face of the terminal to a second face of the terminal (i.e. in-plane, rather than through-plane).

While a "face" of the terminal as used herein is a surface substantially in-plane (x- and y-dimensions), an "edge" as used herein is a surface substantially in at least the z-dimension, such as the x- and z-dimensions or the y- and z-dimensions. Preferably, the channel extends within the terminal substantially in the plane of the terminal, from a first edge of the terminal to a second edge of the terminal. In some embodiments, the second edge is opposite the first edge. In some embodiments, the second edge is the same as the first edge.

Where the terminal is a rectangular prism, in some embodiments, the channel extends within the terminal substantially parallel to an edge of the terminal. In some embodiments, the channel extends within the terminal substantially in the plane of the terminal and parallel to a third edge of the terminal, from a first edge of the terminal to a second edge of the terminal.

In some embodiments, the channel is straight, curved, bent, undulating or tortuous. In some embodiments, the channel is straight or tortuous.

In some embodiments, the channel is straight. A straight channel may be especially preferable where the fluid to be used is a gas.

In some embodiments, the channel is tortuous. A tortuous channel may be especially preferable where the fluid to be used is a liquid.

In some embodiments, especially where the channel is tortuous, the channel comprises a plurality of interconnected hollow spaces within the terminal that are separated by one or more partitions. Preferably, the partitions act as reinforcing ribs. In some embodiments, the partitions have a thickness of from 0.5 to 5.0 mm, preferably from 1.0 to 3.0 mm, more preferably from 1.0 to 2.0 mm, most preferably approximately 1.5 mm.

The exact dimensions of the channel are not limited and will depend upon the dimensions of the terminal and the intended application of the device which contains the assembly. The channel may have a cross-section that is, for example, square, rectangular, hexagonal, triangular, oval or round.

In a typical device in which the terminal is a planar plate, the channel has a diameter of from 5 to 50 mm, for example from 8 to 40 mm, 12 to 30 mm, 15 to 25 mm or about 20 mm. The diameter of the channel is the length of the longest straight line passing from one side to an opposing side of the channel through the centre of the cross-section of the channel (in which one or more sides may be a partition as described above). In some embodiments, the diameter of the channel may vary along the channel. In other embodiments, the diameter of the channel does not substantially vary along the channel.

Suitably, the channel comprises one or more inlets for supply of the fluid into the channel, and one or more outlets for removal of fluid from the channel. For example, the inlet(s) and outlet(s) may be independently in the form of a hole, an opening, a slot or an open protrusion.

In some embodiments, the inlet is in an edge of the terminal or a face of the terminal. In some embodiments, the inlet is in an edge of the terminal. Where there is more than one inlet, the plurality of inlets may be independently in the same or different edge and/or face of the terminal.

In some embodiments, the outlet is in an edge of the terminal or a face of the terminal. In some embodiments, the outlet is in an edge of the terminal. Where there is more than one outlet, the plurality of outlets may be independently in the same or different edge and/or face of the terminal.

The inlet(s) and outlet(s) may be independently in the same or different edge and/or face of the terminal.

In some embodiments, especially where the fluid to be used is a liquid, the channel is sealed. Namely, the channel comprises one or more inlets for supply of the fluid into the channel, and one or more outlets for removal of fluid from the channel, and no other points through which the fluid can escape from the channel. Preferably, the outlet is connected to a means through which the fluid is removed from the assembly, for example a tube. Preferably, the tube is made of insulating material.

In alternative embodiments, especially where the fluid to be used is a gas, the channel is unsealed. Namely, the channel comprises one or more inlets for supply of the fluid into the channel, and one or more outlets for removal of fluid from the channel, and the channel may also comprise other points through which the fluid can escape from the channel. Preferably, the terminal comprises one or more exhaust holes in fluid communication with the channel. An exhaust hole connects an outlet of the channel with the external surroundings, through which fluid can be removed from the channel. The exhaust hole(s) can be, for example, square, rectangular, hexagonal, triangular, oval or round.

In some embodiments, the terminal comprises a plurality of channels through which a fluid is propellable by the fluid-propelling mechanism. Preferably, the channels are separated by partitions. Preferably, the partitions act as reinforcing ribs. In some embodiments, the partitions have a thickness of from 0.5 to 5.0 mm, preferably from 1.0 to 3.0 mm, more preferably from 1.0 to 2.0 mm, most preferably approximately 1.5 mm.

In some embodiments, especially where the fluid to be used is a liquid, one or more of the plurality of channels are interconnected. In some embodiments, each of the plurality of channels is interconnected.

In some embodiments, especially where the fluid to be used is a gas, one or more of the plurality of channels is a discrete channel, i.e. not interconnected. In some embodiments, especially where the fluid to be used is a gas, each of the plurality of channels is a discrete channel, i.e. not interconnected.

In some embodiments, where the terminal comprises a plurality of channels, there is a combination of interconnected and discrete channels.

Suitably, the fluid-propelling mechanism is in fluid communication with the channel of the terminal. The fluid-propelling mechanism may be any mechanism or device that is capable of propelling a fluid through the channel, so that the fluid at least passes from an inlet of the channel to an outlet of the channel. The fluid-propelling mechanism may be, for example, electrically-powered.

In some embodiments, the fluid-propelling mechanism is a pump suitable for propelling a liquid through the channel. Preferably, the pump is a pressure pump.

In alternative embodiments, the fluid-propelling mechanism is a fan suitable for propelling a gas, for example air, through the channel. Preferably, the fan is an air fan. In some embodiments, the fan has a rotational speed of from 500 to 6000 rpm, preferably from 1000 to 5000 rpm, more preferably from 1500 to 4000 rpm, most preferably from 2000 to 3000 rpm. In some embodiments, the fan has a capacity of from 200 to 1000 m³/h, preferably from 300 to 800 m³/h, more preferably from 400 to 700 m³/h, most preferably from 500 to 600 m³/h.

In some embodiments, the fluid-propelling mechanism is connected to the channel of the terminal via a manifold and/or a conduit, such as an air duct or a pipe. Preferably, the pipe is made of insulating material.

In some embodiments, the assembly further comprises a conductive element interposed between the collector and the terminal, in contact with both the collector and the terminal.

Herein, the term "conductive element" refers to an element of the assembly which is electrically conductive such that it facilitates the flow of electrical current between the collector and the terminal.

The contact area between the terminal, conductive element and bipolar collector increases when pressing the block of cells, owing to penetration of the conductive element into micro-imperfections of the terminal and the collector, which contributes to minimum contact resistance at the boundary of the terminal-conductive element-collector junction. The result is reduced internal heat generation caused by the reduced internal resistance and high thermal conductivity of the conductive material, ensuring efficient heat removal.

The design of the assembly has a reduced internal resistance, due to the stable elasticity of the conductive element after pressing and its penetrative ability. Moreover, the self-heating temperature of the assembly generated during operation decreases due to reduced contact resistance and high thermal conductivity of the conductive element.

Hence, the use within an assembly (which may be used in an electrochemical energy storage device) of a terminal, comprising a channel, and a fluid-propelling mechanism, together with a conductive element, leads to a synergistic effect by which improved cooling is observed due to reduced self-heating temperature and improved dissipation of the heat. The benefit of the invention may be more evident when the electrochemical energy storage device is operated in heavy-duty mode in which a high level of internal heat is generated.

In some embodiments, the assembly comprises a laminate structure comprising:
a first layer comprising (or consisting of) the separator;
a second layer, in contact with the first layer, comprising (or consisting of) the first electrode;
a third layer, in contact with the second layer, comprising (or consisting of) the collector;
an additional layer, in contact with the third layer, comprising (or consisting of) the conductive element; and
a fourth layer, in contact with the additional layer, comprising (or consisting of) the terminal.

In some embodiments, the assembly has a laminate structure, each element making up a layer within the laminate structure, with the layers assembled in the following order: second electrode, separator, first electrode, collector, conductive element, terminal. In some embodiments, the second electrode contacts the separator, the separator contacts the first electrode, the first electrode contacts the collector, the collector contacts the conductive element, and the conductive element contacts the terminal.

In some embodiments, the conductive element is thermally conductive. In some embodiments, the conductive element has high thermal conductivity.

In some embodiments, the conductive element has a maximum thermal conductivity of at least 50 W m⁻¹ K⁻¹, for example at least 100 W m⁻¹ K⁻¹.

Herein, "maximum thermal conductivity" denotes the maximum measured value of thermal conductivity of the conductive element, in Wm⁻¹ K⁻¹. For some materials which have anisotropic thermal conductivity, the thermal conductivity may be higher in one direction than another. The maximum thermal conductivity is the maximum measured thermal conductivity for all directions. For example, for a planar material have a thermal conductivity of 150 W m⁻¹ K⁻¹ along its surface and 80 W m⁻¹ K⁻¹ through its thickness, the maximum thermal conductivity is 150 W m⁻¹ K⁻¹.

Thermal conductivity may be measured by laser flash analysis, using laser flash apparatus well-known to the skilled person.

The conductive element may have a maximum thermal conductivity of at least 50 W m⁻¹ K⁻¹, for example at least 60 W m⁻¹ K⁻¹, at least 70 W m⁻¹ K⁻¹, at least 80 W m⁻¹ K⁻¹, at least 90 W m⁻¹ K⁻¹, at least 100 W m⁻¹ K⁻¹, at least 150 W m⁻¹ K⁻¹, at least 200 W m⁻¹ K⁻¹, at least 250 W m⁻¹ K⁻¹, at least 300 W m⁻¹ K⁻¹, at least 350 W m⁻¹ K⁻¹, at least 400 W m⁻¹ K⁻¹, at least 450 W m⁻¹ K⁻¹ or at least 500 W m⁻¹ K⁻¹.

In some embodiments, the conductive element is a planar conductive element, for example a flat sheet or plate. In this way, the contact area between the conductive element and the collector and terminal which sandwich the conductive element is increased, providing higher thermal and electrical conduction.

In some embodiments, the lateral extent of the conductive element is larger than the extent of the collector in at least one direction. In other words, the width or length (x- or y-dimension) of the conductive element, or both width and length, may be larger than the corresponding dimension of the collector. In this way, the maximum possible contact area between the collector and the conductive element in said dimension is achieved, because the entire extent of the collector in said dimension makes contact with the conductive element. In some embodiments, the lateral extent of the conductive element is larger than the extent of the collector in all directions, such that the entire surface of the collector makes contact with the conductive element, providing the maximum possible contact area.

In some embodiments, the conductive element has a thermal anisotropy such that the thermal conductivity of the conductive element is larger along the surface of the element (i.e. in-plane, in the x-y direction) than in the through-plane direction (z-direction) through the conductive element from a first face to a second face. In this way, fast transfer of heat generated within the device is ensured laterally across the conductive element in the x-y direction, which provides efficient transfer of heat perpendicular to the direction of ion flow through the cell, thereby efficiently transferring heat out of the device rather than simply transmitting the heat through the device to other components.

In some embodiments, the thermal anisotropy is such that the ratio of the thermal conductivity of the conductive element along the surface of the element (i.e. in the x-y direction) to the thermal conductivity of the conductive element in the through-plane direction (z-direction) is at least 2:1, for example at least 3:1, at least 5:1 or at least 10:1. In some cases the ratio may be at least 100:1.

In some embodiments, the thermal conductivity of the conductive element along the surface of the element (i.e. in the x-y direction) is from 50 to 500 W m⁻¹ K⁻¹, for example from 100 to 500 W m⁻¹ K⁻¹, from 150 to 500 W m⁻¹ K⁻¹, from 200 to 500 W m⁻¹ K⁻¹ or from 200 to 400 W m⁻¹ K⁻¹.

In some embodiments, the thermal conductivity of the conductive element in the through-plane direction (z-direction) is from 3 to 15 W m⁻¹ K⁻¹, for example from 5 to 15 W m⁻¹ K⁻¹, or from 5 to 10 W m⁻¹ K⁻¹.

In some embodiments, the conductive element comprises a flexible, elastic or ductile material such that the material of the conductive element is able to conform to the surface profile of an adjacent element in the assembly when the assembly is placed under a compressive force. For example, the conductive element may comprise a flexible, elastic or ductile material which penetrates into imperfections within the surface of an adjacent element when the assembly is placed under a compressive force.

In some embodiments, the conductive element comprises graphite. In some embodiments, the conductive element comprises graphite foil. In some embodiments, the conductive element is a graphite foil or graphite sheet. In some embodiments, the conductive element is a pyrolytic graphite sheet (PGS). PGS is made by heating a polymeric film under vacuum to its decomposition temperature, at which point it carbonizes and graphitizes to provide an oriented graphite sheet material.

Graphite is a particularly effective material for the conductive element due to its combined properties of (a) electrical conductivity, (b) thermal conductivity, and (b) stable elasticity allowing the graphite to conform to the contours of the surface of the collector to reduce contact resistance.

In some embodiments, the conductive element is a thermally anisotropic graphite sheet. In some embodiments, the conductive element is a thermally anisotropic PGS. Such a conductive element offers the combined advantages of efficient transmission of heat in the x-y direction, out of the device, as well as reduced internal resistance due to the ability of the graphite sheet to penetrate the uneven structure of the collector surface, increasing the contact area and reducing contact resistance. The invention therefore enables the amount of waste heat generated to be reduced, and enables any residual heat which is generated to be efficiently removed from the device.

An example of a commercially available graphite sheet which may be used as the conductive element in the invention is "Graflex" (Unichimtech, RU), which has a thermal conductivity in the in-plane direction of 175 Wm⁻¹ K⁻¹, and in the through-plane direction of 5 Wm⁻¹ K⁻¹.

The exact dimensions of the conductive element are not limited and will depend upon the intended application of the device which contains the assembly. In a typical device the conductive element may be a planar sheet with a thickness of from 200 to 1000 µm, for example from 200 to 800 µm, 250 to 750 µm, 250 to 700 µm, 400 to 600 µm, or about 500 µm. The x- and y-dimensions of the planar sheet again are not limited. In some embodiments, the x-dimension is longer than the y-dimension. In some embodiments, the x-dimension is from 120 to 200 mm, for example from 120 to 180 mm, 140 to 180 mm, 150 to 170 mm, or about 160 mm. In some embodiments, the y-dimension is from 100 to 180 mm, for example from 120 to 180 mm, 120 to 160 mm, 130 to 150 mm, or about 140 mm.

In some embodiments the assembly of the first aspect comprises one or more additional elements which may each independently be the same or different to one of the elements already described above. The assembly may comprise one or more additional elements each independently selected from separator, electrode, collector, terminal, fluid-propelling mechanism and conductive element.

The assembly may comprise a second collector on the second electrode. The assembly may comprise a third electrode on the second collector. The assembly may comprise a second separator on the third electrode. The assembly may comprise a fourth electrode on the second separator. The assembly may comprise a third collector on the fourth electrode. The assembly may comprise a second terminal, in electrical connection with the third collector. The assembly may comprise a second conductive element interposed between the second terminal and the third collector, in contact with both the second terminal and the third collector. The second conductive element may have a maximum thermal conductivity of at least 50 W m⁻¹ K⁻¹. The second conductive element may be a graphite sheet. The second conductive element may be identical to the conductive element defined above under the first aspect. All of the options and preferences specified in relation to the conductive element defined above under the first aspect also apply to the second conductive element.

Thus in some embodiments the assembly comprises a laminate structure, each element making up a layer within the laminate structure, with the layers assembled in the following order: first terminal, first conductive element (if present), first collector, first electrode, first separator, second electrode, second collector, third electrode, second separator, fourth electrode, third collector, second conductive element (if present), second terminal. In this way the assembly comprises two bipolar cells, the two cells sharing a central bipolar collector (second collector), each of the two cells having a separator with two electrodes on either side, and each of the two cells having a terminal at its extremity, the terminal being in electrical connection with a collector, optionally via a conductive element, and the channel of the terminal being in fluid communication with the fluid-propelling mechanism. If present, the conductive element may have a maximum thermal conductivity of at least 50 W m⁻¹ K⁻¹.

In some embodiments the assembly comprises further elements such that the assembly comprises a greater number of cells, for example three or more cells.

A second aspect of the invention is a cell comprising the assembly as defined in the first aspect.

The cell according to the second aspect may comprise further components in addition to the components defined in the assembly of the first aspect. For example, the cell may comprise one or more additional components selected from a separator, an electrode, a collector, a terminal, a fluid-propelling mechanism and a conductive element.

A third aspect of the invention provides an electrochemical energy storage device comprising the assembly as defined in the first aspect.

The electrochemical energy storage device of the third aspect may comprise the assembly as defined in the first aspect along with one or more additional elements selected from electrodes, separators and collectors as described above, forming a block of one or more cells.

In some embodiments, the electrochemical energy storage device comprises a plurality of blocks of cells, for example from 2 to 15 blocks, from 4 to 12 blocks, from 5 to 10 blocks, or approximately 7 blocks.

In some embodiments, the device comprises from 5 to 50 cells. In some embodiments, the device comprises from 10 to 40 cells. In some embodiments, the device comprises from 20 to 35 cells. In some embodiments, the device comprises from 30 to 35 cells. In some embodiments, the device comprises approximately 32 cells.

In some embodiments, the device comprises means to hold or clamp together multiple elements of the assembly. In some embodiments, the means to hold or clamp together multiple elements of the assembly comprises opposing clamps operable to place the multiple elements under a compressive force.

The device may further comprise clamps disposed at either end of the block of cells, applying a compressive force to the block of cells.

In some embodiments, the block of cells and clamps holding the block of cells may be disposed within a housing. The skilled person is aware of suitable designs for the housing for electrochemical energy storage devices. In preferred embodiments, the connection of the fluid-propelling mechanism to the terminal (i.e. the inlet) is on the opposite side of the housing to the outlet of the channel.

In some embodiments, the device comprises a thermocouple.

The electrochemical energy storage device may be a device selected from a primary battery, a secondary battery and a supercapacitor. The electrochemical energy storage device may be a secondary battery selected from a lead-acid battery, a nickel-cadmium battery, a nickel-metal hydride battery, a nickel-zinc battery, a silver-zinc battery, any type of lithium-ion battery, and any type of lithium-polymer battery.

The electrochemical energy storage device may be a primary battery selected from a manganese oxidezinc battery, a lithium thionyl-chloride battery, a lithium sulfuryl-chloride battery, a zinc-air battery and a lithium-air battery.

The electrochemical energy storage device may be a supercapacitor (also known as ultracapacitors) selected from carbon-carbon supercapacitors with aqueous electrolytes (acids, bases, salts, etc.), carbon-carbon supercapacitors with non-aqueous electrolytes (e.g. based on acetonitrile or polycarbonates), hybrid (asymmetrical) supercapacitors with aqueous electrolytes (C/KOH/NiOOH, PbO₂(H₂SO₄)C, C(H₂SO₄)Pb, etc.), hybrid supercapacitors with "active" electrolyte (C/Br, Cl⁻, I-/C), hybrid supercapacitors with non-aqueous electrolytes (Li/⁻BF₄*AN/C, etc.), and electrochemical energy storage devices with combined method of energy storage on both electrodes: DLC + Faradaic.

Where the assembly comprises the conductive element of high thermal conductivity described above, the assembly may be used in any of the above-mentioned electrochemical energy storage devices to reduce the internal resistance and improve energy efficiency, as well as to improve heat removal further.

A fourth aspect of the invention provides a method of manufacturing the assembly as defined in the first aspect.

In some embodiments the method involves assembling each of the components of the assembly. In some embodiments the method comprises forming an attachment between any two neighbouring components, for example using a suitable sealant. In some embodiments the method further comprises forming one or more cells comprising the assembly and incorporating the cells into an electrochemical energy storage device.

In some embodiments, the method comprises:
(a) providing a first ion-permeable separator and attaching a first electrode to a first face of the first ion-permeable separator and a second electrode to a second face of the first ion-permeable separator, to form an electrode-separator-electrode assembly;
(b) impregnating the electrode-separator-electrode assembly with an electrolyte comprising a salt solution;
(c) placing a first face of a bipolar collector in contact with a first face of the electrode-separator-electrode assembly;
(d) placing a further collector in contact with a second face of the electrode-separator-electrode assembly;
(e) optionally placing a conductive element in contact with the further collector;
(f) placing an electrically conductive metal terminal, comprising a channel, in contact with the conductive element (if present) or the further collector; and
(g) connecting a fluid-propelling mechanism, such that a fluid is propellable through the channel by the fluid-propelling mechanism.

If the conductive element is placed in contact with the further collector in optional step (e), then the conductive element may be as described under the first aspect. All options and preferences specified for the conductive element under the first aspect above apply equally to the conductive element under the method of the fourth aspect.

The step (c) of placing a bipolar collector in contact with a first face of the electrode-separator-electrode assembly may comprise attaching the bipolar collector to the first face of the electrode-separator-electrode assembly, for example using suitable sealant or adhesive.

The step (d) of placing a further collector in contact with a second face of the electrode-separator-electrode assembly may comprise attaching the further collector to the second face of the electrode-separator-electrode assembly, for example using suitable sealant or adhesive.

In step (g), the fluid-propelling mechanism may be connected to the channel of the terminal via a manifold and/or a conduit, such as an air duct or a pipe. Preferably, the pipe is made of insulating material.

The method of the fourth aspect may further comprise assembling a second electrode-separator-electrode assembly in the manner described in step (a) and placing this in contact with a second face of the bipolar collector. Further components may then be attached to the vacant face of the second electrode-separator-electrode assembly in the same manner as described above to provide a complete block of cells.

In some embodiments the method comprises placing a block comprising one or more cells between clamps and applying a compressive force to the block using the clamps.

In some embodiments the method comprises installing the block of cells within a housing. In some embodiments the method comprises installing the clamped block of cells within a housing.

In some embodiments the method comprises attaching electrical terminals to the block of cells.

A fifth aspect of the invention provides a back-up power source or regenerative braking system comprising the device according to the third aspect.

A sixth aspect of the invention is the use of a terminal, comprising a channel, and a fluid-propelling mechanism within an electrochemical energy storage device to improve heat dissipation from the device.

All options and preferences specified for the terminal and the fluid-propelling mechanism under the first aspect above apply equally to the terminal and the fluid-propelling mechanism under the sixth aspect.

The invention includes the combination of the aspects and preferred features described except where such a combination is clearly impermissible or expressly avoided.

### Summary of the Figures

Embodiments and experiments illustrating the principles of the invention will now be discussed with reference to the accompanying figures in which:
**Figure 1** is a general view of the electrochemical energy storage device of the invention with air cooling;
**Figure 2** is a longitudinal cross-section of the electrochemical energy storage device, in which the fluid-propelling mechanism is not shown;
**Figure 3** is a bottom view of the electrochemical device with air cooling, in which the bottom part of the housing is open;
**Figure 4** is a general view of a terminal, which comprises channels, of the electrochemical device;
**Figure 5** is a schematic view of a cell of the electrochemical device;
**Figure 6** is a general view of the electrochemical energy storage device of the invention with liquid cooling, in which the fluid-propelling mechanism is not shown; and
**Figure 7** is a schematic view of the electrochemical energy storage device with liquid cooling.

### Detailed Description of the Invention

Aspects and embodiments of the present invention will now be discussed with reference to the accompanying figures. Further aspects and embodiments will be apparent to those skilled in the art. All documents mentioned in this text are incorporated herein by reference.

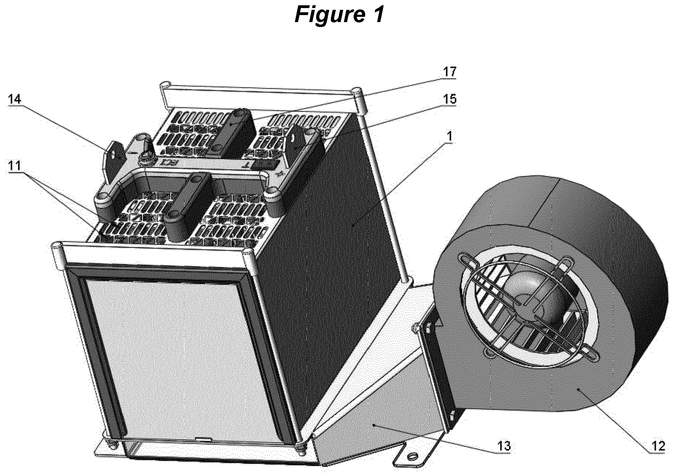

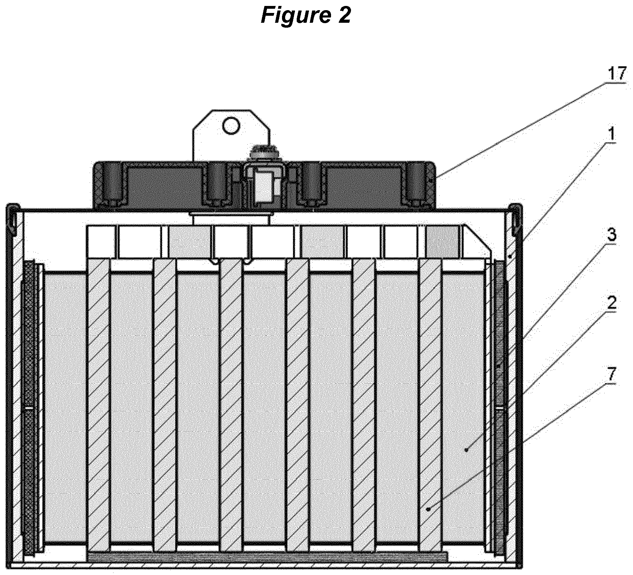

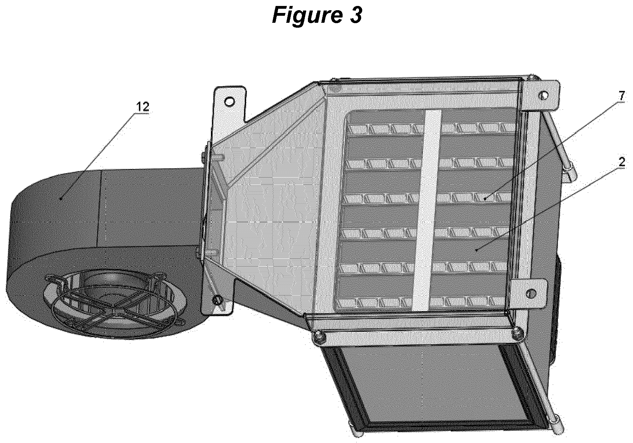

Figure 1, Figure 2 and Figure 3 show different views of an electrochemical energy storage device, which involves air cooling. The fluid-propelling mechanism is an air fan (12), as shown in Figures 1 and 3 (not shown in the longitudinal cross-section view of Figure 2), which acts as a mechanism that supplies and removes air. The air acts as a heat transfer medium. The electrochemical energy storage device comprises a housing (1), with the block(s) of cells (2) therein, and clamps (3) in the form of springs, pressing the block of cells (2).

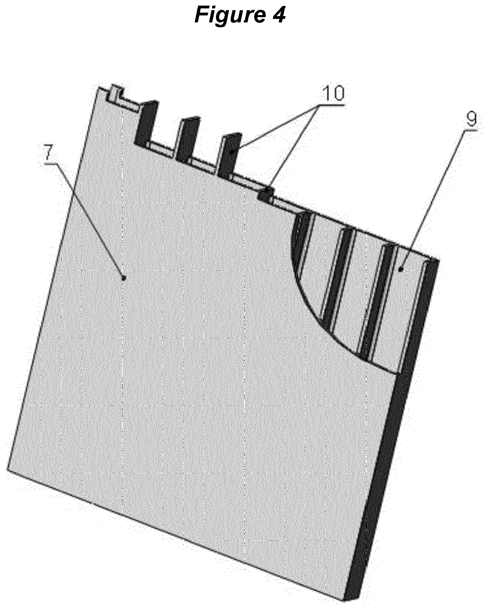

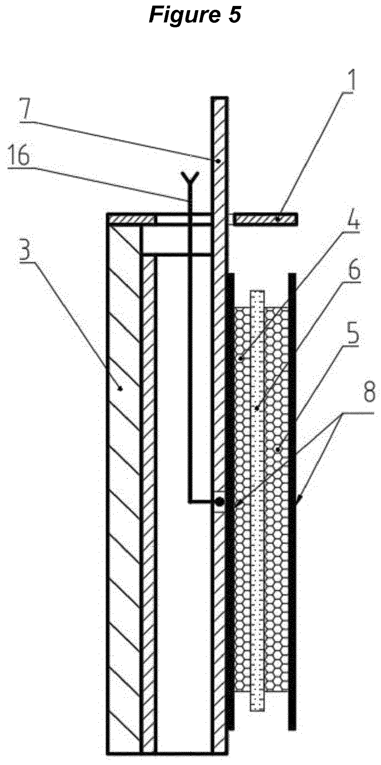

As shown in Figure 5, the cells of the block of cells comprise a positive electrode (4), a negative electrode (5) made of carbon material, and an ion-permeable separator (6) that separates the electrodes and is impregnated with electrolyte, as well as terminals (7) and bipolar collectors (8). As shown in Figure 4, the terminals (7) are made in the form of a flat plate with hollow spaces through the plate, which are the channels (9). The hollow spaces are separated by partitions (10), which act as reinforcing ribs that prevent distortion of the hollow terminal (7) when the block(s) of cells (2) are pressed during assembly. In addition, the partitions increase the heat-dissipating mass of the terminal (7). The terminals (7) are made of a material with high current and thermal conductivity.

Air is propellable by the air fan (12) through the channels (9) of the terminal (7). As shown in Figure 1, the top part of the housing (1) is perforated with exhaust holes (11), which connect the outlets of the channels (9) with the external surroundings. The exhaust holes (11) can be, for example, square, rectangular, hexagonal, triangular, oval or round.

As shown in Figure 3, the bottom part of the housing (1) is connected to the air fan (12). Using an air duct (13), the air fan (12) is in connection with the inlets of the channels (9) of the terminals (7). The terminals (7) of opposite polarity are electrically connected by welding to the terminals (14, 15) of the corresponding polarity respectively (see Figure 1).

To determine the heating temperature, the electrochemical energy storage device is equipped with a thermocouple (16), as shown in Figure 5, which is insulated in a case made of chemically-resistant polymer and is located in the block of cells (2) with its junction (contact element). There is an end-of-charge controller (17) on the top part of the housing (1) of the device (see Figures 1 and 2).

The air fan (12), for example a supply fan, is switched on during operation of the electrochemical energy storage device. The heat generated in the block(s) of cells (2) during operation (charging) of the device warms up the terminals (7). When the air fan (12) is operating, the cooling air flow passes through the channels (9) of the terminals (7) and the exhaust holes (11) in the top part of the housing, which cools the terminals (7) and in turn cools the block(s) of cells (2) as a whole. Therefore the heat is removed directly from the internal part of the block(s) of cells (2) of the electrochemical energy storage device.

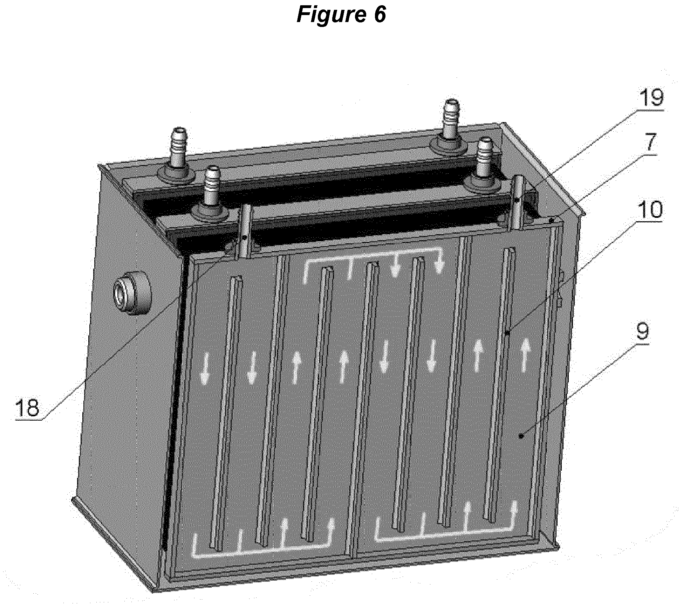

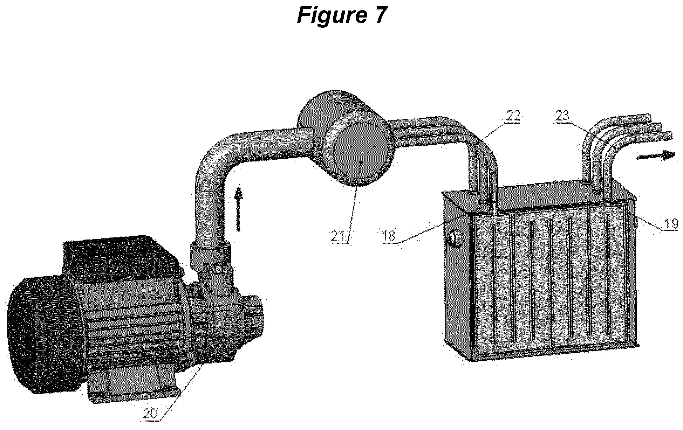

A further embodiment is shown in Figure 6 and Figure 7, which involves liquid cooling. The fluid-propelling mechanism is a pressure pump (20), as shown in Figure 7 (not shown in the view of Figure 6), which acts as a mechanism that supplies and removes liquid, which acts as a heat transfer medium. This embodiment similarly comprises a housing (1), with the block(s) of cells (2) therein, and clamps (3) in the form of springs, pressing the block of cells (2). The cells of the block of cells are as shown in Figure 5, comprising a positive electrode (4), a negative electrode (5) made of carbon material, and an ion-permeable separator (6) that separates the electrodes and is impregnated with electrolyte, as well as terminals (7), bipolar collectors (8) and a thermocouple (16).

As shown in Figure 6, in this embodiment the terminals (7) are sealed and comprise a single channel (9) of connected hollow spaces. The channel (9) comprises an inlet (18) and an outlet (19). The inlet (18) is for supply of liquid into the channel (9), and outlet (19) is for removal of liquid from the channel (9). As shown in Figure 7, the pressure pump (20) is tightly connected to the inlet (18) of the terminal (7) with a manifold (21), using pipes (22) made of insulating material. The outlet (19) is connected to tubes (23), which are also made of insulating material. The design of the channel (9) ensures passing of liquid in the hollow spaces of the terminals (7), for example in the direction that the arrows point in Figure 6. Fittings can be used as the inlet (18) and the outlet (19).

The pressure pump (20) is switched on during operation of the electrochemical energy storage device. The heat generated in the block(s) of cells (2) during operation (charging) of the device warms up the terminals (7). When the pressure pump (20) is operating, the cooling liquid passes through the channels (9) of the terminals (7) from the inlet (18) to the outlet (19), which cools the terminals (7) and in turn cools the block(s) of cells (2) as a whole. Therefore the heat is removed directly from the internal part of the block(s) of cells (2) of the electrochemical energy storage device.

In both embodiments, the connection of the terminals (7) with the fluid-propelling mechanism can be carried out from either side of the housing (1), provided that the outlet for the fluid from the channel(s) (9) of the terminals (7) is located on the opposite side of the housing (1).

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

For the avoidance of any doubt, any theoretical explanations provided herein are provided for the purposes of improving the understanding of a reader. The inventors do not wish to be bound by any of these theoretical explanations.

Any section headings used herein are for organisational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an", and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about", it will be understood that the particular value forms another embodiment. The term "about" in relation to a numerical value is optional and means, for example, +/- 10%.

### Examples

### Electrochemical energy storage device preparation (air cooling)

As shown in Figure 2, the electrochemical energy storage device has 7 blocks, comprising 32 cells, each of which has electrodes of different polarity (see Figure 5), made of a carbon fibre material with dimensions of 128×148 mm.

The thickness of the positive electrode is 250 microns. The thickness of the negative electrode is 350 microns.

The electrodes are separated by an ion-permeable separator with dimensions of 155x135 mm, made of a paper of polymeric fibres. The electrodes and the separator are impregnated with electrolyte in the form of a concentrated salt solution.

The bipolar collectors with dimensions of 160×140 mm are made of a conductive film with thickness of 100 microns.

The terminals (see Figure 4) are made of aluminium in the form of a plate with dimensions of 168×150 mm with hollow spaces (which are the channels) separated by partitions. The thickness of the terminal is 12 mm, and the thickness of the walls and partitions is 1.5 mm.

The device has a capacitance of 330 F and ESR of 10 mOhm.

The assembled blocks of cells were pressed to 4 kgf/cm² and installed in the housing with clamps. The bottom part of the housing was connected to an air supply radial fan using an air duct, with its internal part connected to the inlets of the channels of the terminals. The radial fan DF-150 (voltage 220 V, power 240 W, capacity 550 m³/h, total pressure 420 Pa, 2600 rpm) was used as the air fan. The supplied air volume for cooling the device was 9 m³/minute. The temperature inside the device during tests was measured using a thermocouple.

The device was charged and discharged with a current of 50 A in a voltage range of from 51 to 39 V. The device was cycled until a constant value of difference was reached between the temperature in the device and the temperature of the air of the external surroundings (25 °C).

A prior serial electrochemical energy storage device with a capacitance of 330 F and ESR of 10 mOhm, having terminals without internal channels or hollow spaces and without forced cooling was cycled at the same modes.

The design of a pilot sample of the device above was tested with the following results.

The device of the invention was cycled continuously for 5 cycles at a current of 50 A, and self-heating to 33 °C was recorded. Meanwhile, cycling of the prior device (without forced cooling of the terminals) at the same cycling modes resulted in self-heating to 40 °C.

This demonstrates that a decrease in self-heating is achieved by the device of the invention. If the prior device is cycled continuously, it results in an inevitable increase of its self-heating up to an unacceptable temperature, while a thermal equilibrium occurs in the device of the invention, which meets the operational requirements for the electrochemical energy storage device. The air fan used to cool the terminals through their channels makes it possible to reduce heat accumulation in the device and thus reduce its self-heating temperature, and also increase the cycle time of the device (until the thermocouple is triggered).

### References

A number of publications are cited above in order to more fully describe and disclose the invention and the state of the art to which the invention pertains. Full citations for these references are provided below. The entirety of each of these references is incorporated herein.
RU 2308111 C2.
RU 168096 U1.
RU 109921 U1.
WO 2020/121015 A1.

## Claims

1. An assembly of elements comprising:
a first electrode (4),
a second electrode (5),
a separator (6) interposed between and in contact with the first electrode (4) and the second electrode (5),
a collector (8) on the first electrode (4),
a terminal (7) in electrical connection with the collector (8), and
a fluid-propelling mechanism (12, 20);
wherein the terminal (7) comprises a channel (9) through which a fluid is propellable by the fluid-propelling mechanism (12, 20).

2. The assembly according to claim 1, wherein the channel (9) extends within the terminal (7) substantially in the plane of the terminal (7).

3. The assembly according to either claim 1 or claim 2, wherein the assembly comprises a laminate structure comprising:
a first layer comprising the separator (6);
a second layer, in contact with the first layer, comprising the first electrode (4);
a third layer, in contact with the second layer, comprising the collector (8); and
a fourth layer, optionally in contact with the third layer, comprising the terminal (7).

4. The assembly according to any one of claims 1 to 3, wherein the assembly further comprises a conductive element interposed between the collector (8) and the terminal (7), in contact with both the collector (8) and the terminal (7); optionally wherein the conductive element has a maximum thermal conductivity of at least 50 W m⁻¹ K⁻¹, for example at least 100 W m⁻¹ K⁻¹.

5. The assembly according to any one of claims 1 to 4, wherein the terminal (7) comprises a plurality of channels (9) through which a fluid is propellable by the fluid-propelling mechanism (12, 20), wherein the channels are separated by partitions (10).

6. The assembly according to any one of claims 1 to 5, wherein the fluid-propelling mechanism is a fan (12) suitable for propelling a gas, for example air, through the channel (9).

7. The assembly according to claim 6, wherein the terminal (7) comprises an exhaust hole (11) in fluid communication with the channel (9).

8. The assembly according to any one of claims 1 to 5, wherein the fluid-propelling mechanism is a pump (20) suitable for propelling a liquid through the channel (9).

9. The assembly according to claim 8, wherein the channel (9) comprises an inlet (18) for supply of a liquid into the channel (9), and an outlet (19) for removal of the liquid from the channel (9), and no other points through which the liquid can escape from the channel when in use.

10. A cell comprising the assembly according to any one of claims 1 to 9.

11. An electrochemical energy storage device comprising the assembly according to any one of claims 1 to 9.

12. The device according to claim 11, wherein the device is a primary battery, a secondary battery or a supercapacitor.

13. A back-up power source or regenerative braking system comprising the device according to claim 11 or 12.

14. The use of a terminal (7), comprising a channel (9), and a fluid-propelling mechanism (12, 20) within an electrochemical energy storage device to improve heat dissipation from the device.

15. A method of manufacturing the assembly according to any one of claims 1 to 9.
